# EUROPEAN PATENT APPLICATION

(11) **EP 2 075 063 A1**
(43) Date of publication of application: **01.07.2009**
(21) Application number: 07829917.9
(22) Date of filing: 16.10.2007
(51) Int. Cl.: B01J 23/63, B01D 53/94, B01J 27/053, B01J 29/068

(54) **EXHAUST GAS PURIFYING CATALYST**

(30) Priority: 18.10.2006 JP 2006284153
(71) Applicant: Cataler Corporation, Kakegawa-shi Shizuoka 437-1492 (JP)
(72) Inventor: KITAMURA, Ichiro, Shizuoka 437-1492 (JP); HIRAI, Akimasa, Shizuoka 437-1492 (JP); TAKI, Kenichi, Shizuoka 437-1492 (JP)
(74) Representative: Luderschmidt, Schüler & Partner
(86) International application number: PCT/JP2007/070183
(87) International publication number: WO 2008/047796

(57) **Abstract**

A high exhaust gas-purifying efficiency is achieved. An exhaust gas-purifying catalyst (1) includes a substrate (2), an oxygen storage layer (3) covering the substrate (2) and including an oxygen storage material, and a catalytic layer (4) covering the oxygen storage layer (3) and including palladium, rhodium and a carrier supporting them, the catalytic layer (4) having a precious metal concentration higher than that of the oxygen storage layer (3).

## Description

### Technical Field

The present invention relates to an exhaust gas-purifying catalyst, in particular, to an exhaust gas-purifying catalyst including oxygen storage material.

### Background Art

Until today, as an exhaust gas-purifying catalyst that treats exhaust gas of an automobile, etc., a three-way catalyst with a precious metal supported by a refractory carrier made of an inorganic oxide such as alumina has been widely used. In the three-way catalyst, the precious metal plays the role in promoting reduction of nitrogen oxides (NOₓ) and oxidations of carbon monoxide (CO) and hydrocarbons (HC). Further, the refractory carrier plays the roles in increasing the specific surface area of the precious metal and suppressing the sintering of the precious metal by dissipating heat generated by the reactions.

JP-A 1-281144, JP-A 9-155192 and JP-A 9-221304 each describes an exhaust gas-purifying catalyst using cerium oxide or an oxide containing cerium and another metal element. These oxides are oxygen storage materials having an oxygen storage capacity. When an oxygen storage material is used in a three-way catalyst, the oxidation and reduction reactions can be optimized. However, it is difficult for the three-way catalyst using an oxygen storage material to achieve an excellent performance both in the state just after starting an engine and in the state in which the engine is driven continuously.

In the state just after starting an engine, the temperature of the catalyst is low. The ability of a precious metal to purify an exhaust gas in low temperature conditions is lower than the ability of the precious metal to purify an exhaust gas in high temperature conditions. Thus, in the case where the ability of the precious metal to purify an exhaust gas in the state just after starting an engine is considered, it is advantageous to reduce thermal capacity of the exhaust gas-purifying catalyst, for example, to decrease the amount of the precious metal and oxygen storage material used.

On the other hand, in the state in which an engine is driven continuously, the temperature of the catalyst is high sufficiently. In this case, since the ability of the precious metal to purify an exhaust gas is high, it is advantageous that the exhaust gas-purifying catalyst contains a larger amount of oxygen storage material in order to respond to fluctuations in composition of the exhaust gas.

As above, the performance just after starting an engine and the performance in the state in which an engine is driven continuously contradict each other. Thus, it is difficult to achieve an excellent performance both in the state just after starting an engine and in the state in which the engine is driven continuously, and therefore, it is difficult to invariably achieve a high exhaust gas-purifying efficiency.

### Disclosure of Invention

An object of the present invention is to achieve a high exhaust gas-purifying efficiency.

According to an aspect of the present invention, there is provided an exhaust gas-purifying catalyst comprising a substrate, an oxygen storage layer covering the substrate and including an oxygen storage material, and a catalytic layer covering the oxygen storage layer and including palladium, rhodium and a carrier supporting them, the catalytic layer having a precious metal concentration higher than that of the oxygen storage layer.

### Brief Description of Drawings

FIG. 1 is a perspective view schematically showing an exhaust gas-purifying catalyst according to an embodiment of the present invention;
FIG. 2 is a cross-sectional view schematically showing an example of a structure that can be employed in the exhaust gas-purifying catalyst shown in FIG. 1;
FIG. 3 is a cross-sectional view schematically showing another structure that can be employed in the exhaust gas-purifying catalyst shown in FIG. 1;
FIG. 4 is a cross-sectional view schematically showing another structure that can be employed in the exhaust gas-purifying catalyst shown in FIG. 1;
FIG. 5 is a cross-sectional view schematically showing another structure that can be employed in the exhaust gas-purifying catalyst shown in FIG. 1; and
FIG. 6 is a cross-sectional view schematically showing another structure that can be employed in the exhaust gas-purifying catalyst shown in FIG. 1.

### Best Mode for Carrying Out the Invention

An embodiment of the present invention will be described below.

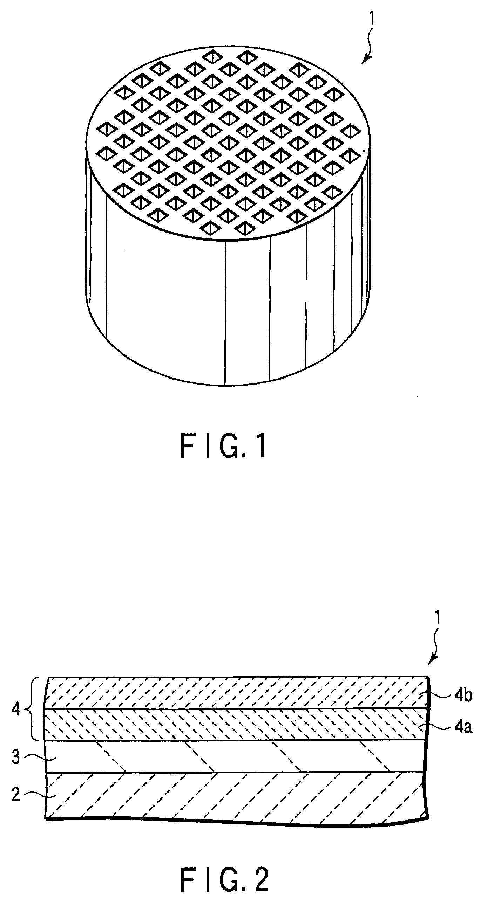

FIG. 1 is a perspective view schematically showing an exhaust gas-purifying catalyst according to an embodiment of the present invention. FIG. 2 is a cross-sectional view schematically showing an example of a structure that can be employed in the exhaust gas-purifying catalyst shown in FIG. 1.

The exhaust gas-purifying catalyst 1 shown in FIGS. 1 and 2 is a monolith catalyst. The exhaust gas-purifying catalyst 1 includes a substrate 2 such as monolith honeycomb substrate. Typically, the substrate 2 is made of ceramics such as cordierite.

On the wall of the substrate 2, an oxygen storage layer 3 is formed. The oxygen storage layer 3 includes a refractory carrier and an oxygen storage material.

The refractory carrier is excellent in heat stability as compared with the oxygen storage material. As a material of the refractory carrier, for example, alumina, zirconia or titania can be used.

The oxygen storage material is, for example, ceria, a composite oxide and/or solid solution of ceria and another metal oxide, or a mixture thereof. As the composite oxide and/or solid solution, a composite oxide and/or solid solution of ceria and zirconia can be used, for example.

The oxygen storage material may further contain a precious metal such as platinum, rhodium and palladium. Generally, in the case where the oxygen storage layer 3 contains a small amount of precious metal, the oxygen storage capacity of the oxygen storage layer 3 is higher than that in the case where the oxygen storage layer 3 contains no precious metals.

The oxygen storage material can further contain an oxide of an alkaline-earth metal such as barium; an oxide of a rare-earth element such as lanthanum, neodymium, praseodymium or yttrium; or a mixture thereof. These oxides may form a composite oxide and/or solid solution with other oxides such as ceria.

On the oxygen storage layer 3, a catalytic layer 4 is formed. The catalytic layer 4 includes a refractory carrier, an oxygen storage material, palladium and rhodium. In the example shown in FIG. 2, the catalytic layer 4 is a layered structure of a first catalytic layer 4a and a second catalytic layer 4b.

The first catalytic layer 4a is interposed between the oxygen storage layer 3 and the second catalytic layer 4b. The first catalytic layer 4a includes a refractory carrier, an oxygen storage material and palladium.

The second catalytic layer 4b covers the first catalytic layer 4a. The second catalytic layer 4b includes a refractory carrier, an oxygen storage material and rhodium.

The first catalytic layer has a palladium concentration higher than that of the second catalytic layer 4b. The second catalytic layer 4b has a rhodium concentration higher than that of the first catalytic layer 4a. For example, the first catalytic layer 4a is substantially free of rhodium, while the second catalytic layer 4b is substantially free of palladium.

A refractory carrier is excellent in heat stability as compared with an oxygen storage material. As the material of the refractory carrier in the catalytic layer 4, the same materials mentioned in connection with the oxygen storage layer 3 can be used, for example. The refractory carrier in the first catalytic layer 4a and the refractory carrier in the second catalytic layer 4b may be the same or different.

As the material of the oxygen storage material included in the catalytic layer 4, the same materials mentioned in connection with the oxygen storage layer 3 can be used, for example. The oxygen storage material in the first catalytic layer 4a and the oxygen storage material in the second catalytic layer 4b may be the same or different.

In the catalytic layer 4, the refractory carrier and/or the oxygen storage material are carriers that support palladium and rhodium.

The amount of the oxygen storage material included in the oxygen storage material 3 is set, for example, at 75% by mass or more of the amount of the oxygen storage material included in the catalytic layer 4. When the mass ratio is set within the above range, an extra-high oxygen storage capacity can be achieved at a small amount of oxygen storage material usage.

The catalytic layer 4 may further include a precious metal other than palladium and rhodium. For example, the catalytic layer 4 may further include an element of platinum group other than rhodium and palladium such as platinum. In this case, only one of the first catalytic layer 4a and the second catalytic layer 4b may further include a precious metal other than palladium and rhodium, or alternatively, both of them may further include a precious metal other than palladium and rhodium.

The catalytic layer 4 has a precious metal concentration higher than that of the oxygen storage layer 3. In the example shown in FIG. 2, each of the first catalytic layer 4a and the second catalytic layer 4b has a precious metal concentration higher than that of the oxygen storage layer 3.

In general, the catalytic layer 4 includes a larger amount of precious metal as compared with the oxygen storage layer 3. The ratio of the amount of precious metal included in the catalytic layer 4 with respect to the whole amount of precious metal included in the exhaust gas-purifying catalyst 1 is, for example, 80% by mass or more.

The catalytic layer 4 can further include an oxide of alkaline-earth metal such as barium; an oxide of rare-earth element such as lanthanum, neodymium, praseodymium and yttrium; or a mixture thereof. This oxide may form a composite oxide and/or a solid solution together with another oxide such as ceria. The oxide may be included in either one of the first catalytic layer 4a and the second catalytic layer 4b or may be included in both of them.

In the case where the oxygen storage layer 3 is omitted from the exhaust gas-purifying catalyst 1, the catalytic layer 4 must play both the role in promoting reduction of NOₓ and oxidations of CO and HC and the role in storing oxygen. However, in this case, when the coated amount of the catalytic layer 4 is decreased in order to reduce the heat capacity of the exhaust gas-purifying catalyst 1 and the concentration of precious metal is increased in order to maximize the efficiencies of reduction of NOₓ and oxidations of CO and HC, the ability of the oxygen storage material to store oxygen is reduced in addition to that the amount of the oxygen storage material is reduced. As a result, the oxygen storage capacity of the catalytic layer 4 is decreased significantly, and thus the exhaust gas-purifying efficiency of the exhaust gas-purifying catalyst 1 becomes greatly susceptible to the composition of the exhaust gas.

In contrast, in the case where the oxygen storage layer 3 is interposed between the catalytic layer 4 and the substrate 2, it is possible that the catalytic layer 4 mainly plays the role in promoting reduction of NOₓ and oxidations of CO and HC, while the oxygen storage layer 3 plays at least a part of the role in storing oxygen. Thus, it is possible to employ the design in the oxygen storage layer 3 that maximizes the oxygen storage capacity of the oxygen storage material. For this reason, even when the coated amount of the oxygen storage layer 3 is decreased, a sufficient oxygen storage capacity can be achieved. Therefore, even in the case where the coated amount of the catalytic layer 4 is decreased and the concentrations of palladium and rhodium in the catalytic layer 4 are increased, it is impossible that the oxygen storage capacity of the exhaust gas-purifying catalyst 1 becomes insufficient. In addition, since the oxygen storage layer 3 is interposed between the catalytic layer 4 and the substrate 2, the oxygen storage layer 3 does not hinder the exhaust gas from contacting the catalytic layer 4. Therefore, when such a structure is employed, it is possible to achieve an excellent performance both in the state just after starting an engine and in the state in which the engine is driven continuously.

Various modifications can be made to the exhaust gas-purifying catalyst 1.

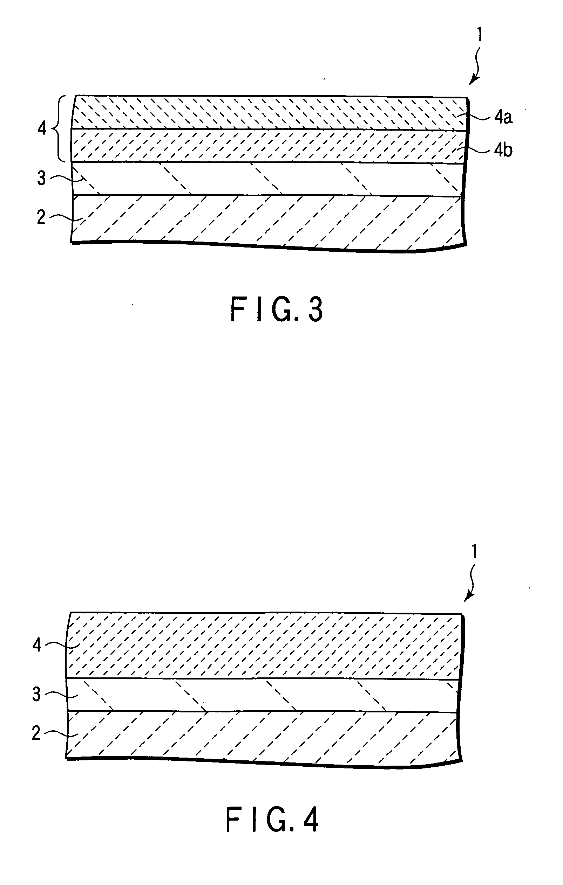

FIGS. 3 to 6 are cross-sectional views schematically showing other structures that can be employed in the exhaust gas-purifying catalyst shown in FIG. 1.

The exhaust gas-purifying catalyst 1 shown in FIG. 3 has the same structure as that of the exhaust gas-purifying catalyst 1 shown in FIG. 2 except that the second catalytic layer 4b is interposed between the oxygen storage layer 3 and the first catalytic layer 4a. Like this, the first catalytic layer 4a and the second catalytic layer 4b are stacked in any order.

The exhaust gas-purifying catalyst 1 shown in FIG. 4 has the same structure as that of the exhaust gas-purifying catalyst 1 shown in FIG. 2 except that the catalytic layer 4 has a single-layer structure. That is, in the catalytic layer 4, palladium and rhodium are almost homogeneously mixed together. Like this, the catalytic layer 4 may have a single-layer structure or a multilayer structure.

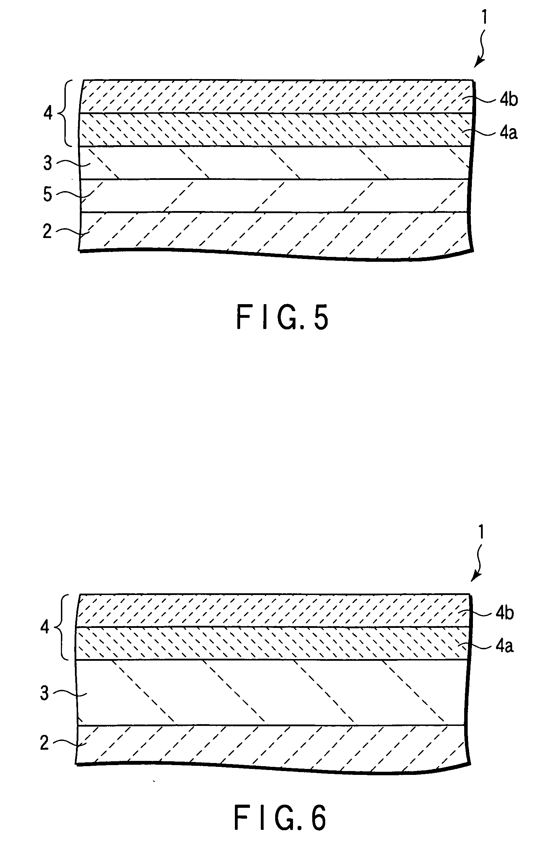

The exhaust gas-purifying catalyst 1 shown in FIG. 5 has the same structure as that of the exhaust gas-purifying catalyst 1 shown in FIG. 2 except that it further includes a hydrocarbon-adsorbing layer 5 interposed between the substrate 2 and the oxygen storage layer 3. The hydrocarbon-adsorbing layer 5 includes a hydrocarbon-adsorbing material such as zeolite. In the case where such a structure is employed, HC emission can be reduced as compared with the case where the structure shown in FIG. 2 is employed.

The exhaust gas-purifying catalyst 1 shown in FIG. 6 has the same structure as that of the exhaust gas-purifying catalyst 1 shown in FIG. 2 except that the oxygen storage layer 3 further includes a hydrocarbon-adsorbing material such as zeolite. In the case where such a structure is employed, HC emission can be reduced as compared with the case where the structure shown in FIG. 2 is employed. Further, in the case where the structure shown in FIG. 6 is employed, manufacture of the exhaust gas-purifying catalyst 1 can be simplified as compared with the case where the structure shown in FIG. 5 is employed.

Note that in the exhaust gas-purifying catalysts 1 shown in FIGS. 5 and 6, the structure shown in FIG. 3 or 4 can be employed in the catalytic layer 4. That is, in the exhaust gas-purifying catalysts 1 shown in FIG. 5 and 6, the first catalytic layer 4a and the second catalytic layer 4b may be stacked in reverse order or may employ a single-layer structure in the catalytic layer 4.

Examples of the present invention will be described below.

### <Manufacture of catalyst A>

In this example, the exhaust gas-purifying catalyst 1 shown in FIG. 2 was manufactured by the following method.

First, 20g of alumina powder, 20g of cerium-zirconium oxide powder and deionized water are mixed together to prepare slurry. Hereinafter, the slurry is referred to as slurry S1.

Then, a monolith honeycomb substrate 2 made of cordierite was coated with the whole amount of the slurry S1. Here, used was a monolith honeycomb substrate having a length of 100 mm and a volumetric capacity of 1.0L and provided with cells at a cell density of 900 cells per square inch. The monolith honeycomb substrate 2 was dried at 250°C for 1 hour, and subsequently fired at 500°C for 1 hour. Thus, an oxygen storage layer 3 was formed on the monolith honeycomb substrate 2.

Next, 12.5g of alumina powder, 12.5g of cerium-zirconium oxide powder, and an aqueous palladium nitrate containing 1.5g of palladium were mixed together to prepare slurry. Hereinafter, the slurry is referred to as slurry S2.

Then, the above monolith honeycomb substrate 2 was coated with the whole amount of the slurry S2. The monolith honeycomb substrate 2 was dried at 250°C for 1 hour, and subsequently fired at 500°C for 1 hour. Thus, a first catalytic layer 4a was formed on the oxygen storage layer 3.

Thereafter, 12.5g of alumina powder, 12.5g of cerium-zirconium oxide powder, and an aqueous rhodium nitrate containing 0.5g of rhodium were mixed together to prepare slurry. Hereinafter, the slurry is referred to as slurry S3.

Then, the above monolith honeycomb substrate 2 was coated with the whole amount of the slurry S3. The monolith honeycomb substrate 2 was dried at 250°C for 1 hour, and subsequently fired at 500°C for 1 hour. Thus, a second catalytic layer 4b was formed on the first catalytic layer 4a.

By the method described above, the exhaust gas-purifying catalyst 1 shown in FIG. 2 was completed. Hereinafter, the exhaust gas-purifying catalyst 1 is referred to as catalyst A.

### <Manufacture of catalyst B>

In this example, the exhaust gas-purifying catalyst 1 shown in FIG. 3 was manufactured by the following method.

That is, in this example, the exhaust gas-purifying catalyst 1 shown in FIG. 3 was manufactured by the same method as that described for the catalyst A except that the slurry S3 was used instead of the slurry S2 and the slurry S2 was used instead of the slurry S3. Hereinafter, the exhaust gas-purifying catalyst 1 is referred to as catalyst B.

### <Manufacture of catalyst C>

In this example, the exhaust gas-purifying catalyst 1 shown in FIG. 2 was manufactured by the following method.

27g of alumina powder, 12.5g of cerium-zirconium oxide powder, and an aqueous palladium nitrate containing 1.5g of palladium were mixed together to prepare slurry. Hereinafter, the slurry is referred to as slurry S4.

Then, 27g of alumina powder, 12.5g of cerium-zirconium oxide powder, and an aqueous rhodium nitrate containing 0.5g of rhodium were mixed together to prepare slurry. Hereinafter, the slurry is referred to as slurry S5.

In this example, the exhaust gas-purifying catalyst 1 shown in FIG. 2 was manufactured by the same method as that described for the catalyst A except that the slurry S4 was used instead of the slurry S2 and the slurry S5 was used instead of the slurry S3. Hereinafter, the exhaust gas-purifying catalyst 1 is referred to as catalyst C.

### <Manufacture of catalyst D>

In this example, the exhaust gas-purifying catalyst 1 shown in FIG. 2 was manufactured by the following method.

2g of alumina powder, 12.5g of cerium-zirconium oxide powder, and an aqueous palladium nitrate containing 1.5g of palladium were mixed together to prepare slurry. Hereinafter, the slurry is referred to as slurry S6.

Then, 2g of alumina powder, 12.5g of cerium-zirconium oxide powder, and an aqueous rhodium nitrate containing 0.5g of rhodium were mixed together to prepare slurry. Hereinafter, the slurry is referred to as slurry S7.

In this example, the exhaust gas-purifying catalyst 1 shown in FIG. 2 was manufactured by the same method as that described for the catalyst A except that the slurry S6 was used instead of the slurry S2 and the slurry S7 was used instead of the slurry S3.

Hereinafter, the exhaust gas-purifying catalyst 1 is referred to as catalyst D.

### <Manufacture of catalyst E>

In this example, the exhaust gas-purifying catalyst 1 shown in FIG. 2 was manufactured by the following method.

21.2g of alumina powder, 18.8g of cerium-zirconium oxide powder, and deionized water were mixed together to prepare slurry. Hereinafter, the slurry is referred to as slurry S8.

In this example, the exhaust gas-purifying catalyst 1 shown in FIG. 2 was manufactured by the same method as that described for the catalyst A except that the slurry S8 was used instead of the slurry S1. Hereinafter, the exhaust gas-purifying catalyst 1 is referred to as catalyst E.

### <Manufacture of catalyst F>

In this example, the exhaust gas-purifying catalyst 1 shown in FIG. 2 was manufactured by the following method.

20g of alumina powder, 20g of cerium-zirconium oxide powder, an aqueous palladium nitrate containing 0.05g of palladium, and an aqueous rhodium nitrate containing 0.05g of rhodium were mixed together to prepare slurry. Hereinafter, the slurry is referred to as slurry S9.

Then, 12.5g of alumina powder, 12.5g of cerium-zirconium oxide powder, and an aqueous palladium nitrate containing 1.45g of palladium were mixed together to prepare slurry. Hereinafter, the slurry is referred to as slurry S10.

Further, 12.5g of alumina powder, 12.5g of cerium-zirconium oxide powder, and an aqueous rhodium nitrate containing 0.45g of rhodium were mixed together to prepare slurry. Hereinafter, the slurry is referred to as slurry S11.

In this example, the exhaust gas-purifying catalyst 1 shown in FIG. 2 was manufactured by the same method as that described for the catalyst A except that the slurry S9 was used instead of the slurry S1, the slurry S10 was used instead of the slurry S2, and the slurry S11 was used instead of the slurry S3. Hereinafter, the exhaust gas-purifying catalyst 1 is referred to as catalyst F.

### <Manufacture of catalyst G>

In this example, the exhaust gas-purifying catalyst 1 shown in FIG. 2 was manufactured by the following method.

20g of alumina powder, 20g of cerium-zirconium oxide powder, 4g of barium sulfate powder, 2g of lanthanum carbonate powder, and deionized water were mixed together to prepare slurry. Hereinafter, the slurry is referred to as slurry S12.

Then, 12.5g of alumina powder, 12.5g of cerium-zirconium oxide powder, an aqueous palladium nitrate containing 1.5g of palladium, 2.5g of barium sulfate powder, and 1.3g of lanthanum carbonate powder were mixed together to prepare slurry. Hereinafter, the slurry is referred to as slurry S13.

Further, 12.5g of alumina powder, 12.5g of cerium-zirconium oxide powder, an aqueous rhodium nitrate containing 0.5g of rhodium, 2.5g of barium sulfate powder, and 1.3g of lanthanum carbonate powder were mixed together to prepare slurry. Hereinafter, the slurry is referred to as slurry S14.

In this example, the exhaust gas-purifying catalyst 1 shown in FIG. 2 was manufactured by the same method as that described for the catalyst A except that the slurry S12 was used instead of the slurry S1, the slurry S13 was used instead of the slurry S2, and the slurry S14 was used instead of the slurry S3. Hereinafter, the exhaust gas-purifying catalyst 1 is referred to as catalyst G.

### <Manufacture of catalyst H>

In this example, the exhaust gas-purifying catalyst 1 shown in FIG. 4 was manufactured by the following method.

First, an oxygen storage layer 3 was formed on a monolith honeycomb substrate 2 by the same method as that described for the catalyst A.

Next, 25g of alumina powder, 25g of cerium-zirconium oxide powder, an aqueous palladium nitrate containing 1.5g of palladium, and an aqueous rhodium nitrate containing 0.5g of rhodium were mixed together to prepare slurry. Hereinafter, the slurry is referred to as slurry S15.

Then, the above monolith honeycomb substrate 2 was coated with the whole amount of the slurry S15. The monolith honeycomb substrate 2 was dried at 250°C for 1 hour, and subsequently fired at 500°C for 1 hour. Thus, a catalytic layer 4 was formed on the oxygen storage layer 3.

By the method described above, the exhaust gas-purifying catalyst 1 shown in FIG. 4 was completed. Hereinafter, the exhaust gas-purifying catalyst 1 is referred to as catalyst H.

### <Manufacture of catalyst I>

In this example, the exhaust gas-purifying catalyst 1 shown in FIG. 5 was manufactured by the following method.

First, 100g of zeolite powder and deionized water were mixed together to prepare slurry. Hereinafter, the slurry is referred to as slurry S16.

Next, the same monolith honeycomb substrate as that used in the manufacture of the catalyst A was coated with the whole amount of the slurry S16. The monolith honeycomb substrate 2 was dried at 250°C for 1 hour, and subsequently fired at 500°C for 1 hour. Thus, a hydrogen-adsorbing layer 5 was formed on the monolith honeycomb substrate 2.

Then an oxygen storage layer 3, a first catalytic layer 4a and a second catalytic layer 4b were formed on the hydrocarbon-adsorbing layer 5 in this order by the same method as that described for the catalyst A.

By the method described above, the exhaust gas-purifying catalyst 1 shown in FIG. 5 was completed. Hereinafter, the exhaust gas-purifying catalyst 1 is referred to as catalyst I.

### <Manufacture of catalyst J>

In this example, the exhaust gas-purifying catalyst 1 shown in FIG. 6 was manufactured by the following method.

20g of alumina powder, 20g of cerium-zirconium oxide powder, 100g of zeolite powder and deionized water were mixed together to prepare slurry. Hereinafter, the slurry is referred to as slurry S17.

In this example, the exhaust gas-purifying catalyst 1 shown in FIG. 6 was manufactured by the same method as that described for the catalyst A except that the slurry S17 was used instead of the slurry S1. Hereinafter, the exhaust gas-purifying catalyst 1 is referred to as catalyst J.

### <Manufacture of catalyst K>

In this example, an exhaust gas-purifying catalyst was manufactured by the following method.

40g of alumina powder and deionized water were mixed together to prepare slurry. Hereinafter, the slurry is referred to as slurry S18.

In this example, an exhaust gas-purifying catalyst was manufactured by the same method as that described for the catalyst A except that the slurry S18 was used instead of the slurry S1. Hereinafter, the exhaust gas-purifying catalyst is referred to as catalyst K.

### <Manufacture of catalyst L>

In this example, an exhaust gas-purifying catalyst was manufactured by the same method as that described for the catalyst A except that the monolith honeycomb substrate was not coated with the slurry S1. Hereinafter, the exhaust gas-purifying catalyst is referred to as catalyst L.

### <Tests>

Each of the catalysts A to H was mounted on an automobile having an engine with a piston displacement of 0.7L. Then, each automobile was driven to 60,000 km of endurance travel distance. Thereafter, emission per 1 km of travel distance was determined for each of nonmethane hydrocarbon (NMHC), CO and NOₓ by 10 and 15-mode method and 11-mode method. Note that the emission of NMHC is a value in gram obtained by converting a value represented in volumetric ratio based on equivalent carbon number. Note also that the measured value obtained by the 10 and 15-mode method was multiplied by 88/100, the measured value obtained by the 11-mode method was multiplied by 12/100, and the sum thereof was calculated. The results are summarized in the table below.

### [Table 1]

**Table 1**

| Catalyst | Emission per 1 km of travel distance (g/km) | | |
|---|---|---|---|
| | NMHC | CO | NOₓ |
| A | 0.010 | 0.357 | 0.003 |
| B | 0.011 | 0.380 | 0.005 |
| C | 0.015 | 0.472 | 0.003 |
| D | 0.009 | 0.321 | 0.008 |
| E | 0.010 | 0.365 | 0.005 |
| F | 0.007 | 0.338 | 0.002 |
| G | 0.011 | 0.341 | 0.002 |
| H | 0.012 | 0.362 | 0.004 |
| I | 0.006 | 0.451 | 0.009 |
| J | 0.006 | 0.458 | 0.008 |
| K | 0.022 | 0.481 | 0.022 |
| L | 0.020 | 0.450 | 0.021 |

As shown in the above table, in the case where the catalysts A to J were used, each emission of NMHC and NOₓ was low as compared with the case where the catalysts K and L were used, while each CO emission was equal to or lower than that achieved in the case where the catalysts K and L were used. Particularly, in the case where the catalysts A to J were used, each emission of NMHC and NOₓ was significantly decreased as compared with the case where the catalysts K and L were used.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. An exhaust gas-purifying catalyst comprising:
a substrate;
an oxygen storage layer covering the substrate and including an oxygen storage material; and
a catalytic layer covering the oxygen storage layer and including palladium, rhodium and a carrier supporting them, the catalytic layer having a precious metal concentration higher than that of the oxygen storage layer.

2. The exhaust gas-purifying catalyst according to claim 1, wherein a precious metal content of the catalytic layer is 80% by mass or more of a precious metal content of the exhaust gas-purifying catalyst.

3. The exhaust gas-purifying catalyst according to claim 1, wherein the catalytic layer is free of oxygen storage materials or an oxygen storage material content of the oxygen storage layer is 75% by mass or more of an oxygen storage material content of the catalytic layer.

4. The exhaust gas-purifying catalyst according to claim 1, wherein the catalytic layer further includes an oxide of an alkaline-earth metal and/or an oxide of a rare-earth element.

5. The exhaust gas-purifying catalyst according to claim 1, wherein the catalytic layer further includes oxide(s) of barium and/or lanthanum.

6. The exhaust gas-purifying catalyst according to claim 1, wherein the oxygen storage material contains cerium.

7. The exhaust gas-purifying catalyst according to claim 1, wherein the oxygen storage material includes a cerium-zirconium oxide.

8. The exhaust gas-purifying catalyst according to claim 1, wherein the oxygen storage layer further includes a hydrocarbon-adsorbing material.

9. The exhaust gas-purifying catalyst according to claim 8, wherein the hydrocarbon-adsorbing material includes zeolite.

10. The exhaust gas-purifying catalyst according to claim 1, further comprising a hydrocarbon-adsorbing layer interposed between the substrate and the oxygen storage layer and including a hydrocarbon-adsorbing material.

11. The exhaust gas-purifying catalyst according to claim 10, wherein the hydrocarbon-adsorbing material includes zeolite.

12. The exhaust gas-purifying catalyst according to claim 1, wherein the catalytic layer includes a layered structure of first and second catalytic layers, the first catalytic layer having a palladium concentration higher than that of the second catalytic layer, and the catalytic layer having a rhodium concentration higher than that of the first catalytic layer.

13. The exhaust gas-purifying catalyst according to claim 1, wherein the catalytic layer has a monolayer structure.
